Europäisches Patentamt

European Patent Office

Office européen des brevets

(11) Veröffentlichungsnummer: **0 291 094 B1**

(12) **EUROPÄISCHE PATENTSCHRIFT**

(45) Veröffentlichungstag der Patentschrift: **04.08.93**

(21) Anmeldenummer: **88107801.8**

(22) Anmeldetag: **14.05.88**

(51) Int. Cl.⁵: $G02C$ **7/02**

(54) **Progressives Brillenglas.**

(30) Priorität: **14.05.87 DE 3716201**

(43) Veröffentlichungstag der Anmeldung:
**17.11.88 Patentblatt 88/46**

(45) Bekanntmachung des Hinweises auf die
Patenterteilung:
**04.08.93 Patentblatt 93/31**

(84) Benannte Vertragsstaaten:
**AT BE CH DE ES FR GB IT LI LU NL SE**

(56) Entgegenhaltungen:
**EP-A- 0 039 497**
**EP-A- 0 132 955**
**DE-A- 3 147 952**
**DE-A- 3 331 757**

(73) Patentinhaber: **Optische Werke G. Rodenstock**
**Isartalstrasse 43**
**W-8000 München 5(DE)**

(72) Erfinder: **Guilino, Günther**
**Kriegelsteiner Strasse 3**
**W-8000 München 71(DE)**
Erfinder: **Barth, Rudolf**
**Sommerweg 1**
**W-8061 Vierkirchen(DE)**
Erfinder: **Stetter, Hans**
**Pestalozzistrasse 14**
**W-8000 München 5(DE)**

(74) Vertreter: **Münich, Wilhelm, Dr. et al**
**Kanzlei Münich, Steinmann, Schiller**
**Wilhelm-Mayr-Str. 11**
**W-8000 München 21 (DE)**

Rank Xerox (UK) Business Services
(3.10/3.6/3.3.1)

# Beschreibung

## Technisches Gebiet

Die Erfindung bezieht sich auf ein progressives Brillenglas mit einer konvexen Vorderfläche und einer konkaven augenseitigen Fläche, von denen die Vorderfläche oder die augenseitige Fläche als sog. Gleitsichtfläche gestaltet ist, auf der die Brechkraft von einem Fernteil (FT) über eine Progressionszone (PZ) zu einem Nahteil (NT) ansteigt, gemäß dem Oberbegriff des Anspruchs 1 oder 2.

## Stand der Technik

Bei progressiven Brillengläsern besteht allgemein das Problem, daß die Progression, d.h. die Brechwertzunahme auf dem Hauptmeridian aufgrund der sich aus den Stetigkeitsbedingungen der Fläche ergebenden Verschneidungen zu einem starken Anstieg des Astigmatismus und der Verzeichnung in den Randbereichen führt.

Deshalb ist bereits in der US-PS 2 878 721 vorgeschlagen worden, die Krümmungen der Orthogonal- bzw. Horizontalschnitte im Fernteil bei der Vorderfläche mit wachsendem Abstand vom Hauptmeridian zunehmen und im Nahteil abnehmen zu lassen. Zwischen Fern- und Nahteil ergibt sich gemäß dieser Druckschrift als Übergang von dem Bereich, in dem die Krümmungsradien zunehmen zu den Bereich, in dem die Krümmungsradien abnehmen, ein kreisförmiger Schnitt. Dieses Konzept führt dazu, daß sich die Unterschiede zwischen Fern- und Nahteil im Randbereich verringern, so daß sich auch kleinere Bildfehler und insbesondere kleinere Flächenastigmatismus- und Verzeichnungswerte ergeben.

Nachteilig bei diesem bekannten Konzept ist jedoch, daß die Linien gleichen Flächenbrechwerts auch in der Umgebung des Hauptmeridians im Fernteil nach oben und im Nahteil nach unten gekrümmt sind, so daß die Linien gleichen Flächenbrechwerts nicht horizontal verlaufen. Um die Krümmung der Linien gleichen Flächenbrechwerts nach oben bzw. unten zu verringern, ist deshalb bereits in der US-PS 2 878 721 vorgeschlagen worden, daß sich der Verlauf der Krümmungsänderung von Horizontal- bzw. Orthogonalschnitten mit wachsendem Abstand vom Hauptmeridian wieder umkehrt.

Dieses in der US-PS 2 878 721 beschriebene Konzept für die Änderung der Krümmungsradien Horizontalschnitte bzw. der Orthogonalschnitte im Bereich des Hauptmeridians, deren Verlauf im wesentlichen gleich dem Verlauf der Horizontalschnitte ist, ist in der DE-AS 20 44 639, der DE-OS 30 16 935 und der DE-OS 31 51 766 übernommen worden.

Trotz der Umkehr des Verlaufs der Krümmungsänderung der Horizontal- bzw. Orthogonalschnitte weisen die bekannten Flächen den Nachteil auf, daß die Linien gleichen Flächenbrechwerts insbesondere im Progressionsbereich beidseits des Hauptmeridians stark gebogen sind.

## Darstellung der Erfindung

Der Erfindung liegt die Aufgabe zugrunde, ein progressives Brillenglas gemäß dem Oberbegriff des Anspruchs 1 oder 2 anzugeben, bei dem die Linien gleichen Flächenbrechwerts wenigstens im Bereich des Hauptmeridians weitgehend horizontal verlaufen.

Eine erfindungsgemäße Lösung dieser Aufgabe ist für ein Brillenglas, bei dem die Vorderfläche die Gleitsichtfläche bzw. die progressive Fläche ist, im Anspruch 1 und für ein Brillenglas, bei dem die augenseitige Fläche die Gleitsichtfläche ist, im Anspruch 2 angegeben.

Diese erfindungsgemäße Ausbildung "entkoppelt" den Übergang zwischen dem Fernteil und dem Nahteil im Bereich des Hauptmeridians und den entsprechenden Übergang in den vom Hauptmeridian beabstandeten Bereichen. Dadurch beeinflussen Kompromisse, die u.U. im Randbereich erforderlich sind, nicht die Flächengestaltung in der Umgebung des Hauptmeridians, also in den Teil, der zum deutlichen Sehen dient. Anders ausgedrückt, zeigt die Fläche bei unterschiedlichen Hauptmeridian-Koordinaten den Übergang von Fernteil- zu Nahteil-Eigenschaften für den Bereich um den Hauptmeridian bzw. den vom Hauptmeridian beabstandeten Bereich.

Durch diese Ausbildung der progressiven Fläche erhält man ein Glas, bei dem der Flächenastigmatismus, der in an sich bekannter Weise in den peripheren Bereichen und insbesondere in den seitlichen unteren Randbereichen konzentriert ist, gleich oder kleiner als bei den meisten Gläsern gemäß dem Stand der Technik ist. Darüberhinaus ist die Änderung des Astigmatismus kleiner als bei Gläsern gemäß dem Stand der Technik. Vor allen aber weist das erfindungsgemäße Brillenglas wenigstens im Bereich des Hauptmeridians einen annähernd horizontalen Verlauf der Linien gleichen Flächenbrechwerts bzw. der Linien gleicher Wirkung auf.

Weiterbildungen der Erfindung sind in den Unteransprüchen angegeben.

Beispielsweise ist im Anspruch 3 eine vorteilhafte Weiterbildung gekennzeichnet, bei der sich im Bereich seitlich des Hauptmeridians zunächst der Krümmungsradius ändert, dann aber über einen größeren Bereich nahezu konstant bleibt. Dieses dem Stand der Technik und insbesondere der Lehre der DE-OS 31 47 952 entgegengesetzte Variationsverhalten der Krümmungsradien führt dazu, daß ein großer und nahezu astigmatismusfreier Fernteil (Flächenastigmatismus < 0,5 dpt und insbesondere < 0,25 dpt) ohne Störung des seitlichen Teils der Übergangszone realisierbar ist.

Weiterhin ist es besonders vorteilhaft, wenn die Variation der Krümmungsradien im Nahteil vergleichsweise stark, in Fernteil jedoch vergleichsweise klein ist.

Eine weitere Eigenschaft des erfindungsgemäßen Brillenglases ist, daß sich im Gegensatz zum Stand der Technik weder im Horizontal- noch im Orthogonalschnitt ein auch nur annähernd kreisförmiger Schnitt ergibt (Anspruch 4). Im Gegenteil, in der Übergangszone, die nach dem Stand der Technik in der Regel einen wenigstens annähernd kreisförmigen Schnitt aufweist, ergibt sich gemäß der Erfindung eine scheinbar sinusförmige Variation des Krümmungsradius mit vergleichsweise großen Amplituden als Funktion des Abstandes vom Hauptmeridian. Insbesondere ist es ein Kennzeichen einer vorteilhaften Weiterbildung der Erfindung, daß der Fernteil, der einen im Vergleich zum Stand der Technik großen Bereich mit kleinen Astigmatismuswerten aufweist, dennoch nicht sphärisch ausgebildet ist (Anspruch 5).

Dabei können - ebenfalls im Gegensatz zum stand der Technik - sogar die Werte der Krümmungsradien zunächst kleiner und dann größer als am Hauptmeridian oder umgekehrt werden. Besonders vorteilhaft ist es jedoch, wenn die Krümmungsradien von Horizontalschnitten in der Progressionszone mit zunehmendem Abstand vom Hauptmeridian zunächst kleiner und dann größer als am Hauptmeridian oder zunächst größer und dann etwa gleich groß wie am Hauptmeridian werden.

Ferner kann es für das erfindungsgemäße Brillenglas charakteristisch sein, daß die Umkehr der Krümmungsänderung nicht in einem konstanten Abstand vom Hauptmeridian erfolgt, sondern daß sich der Abstand des Punktes vom Hauptmeridian, an dem die Krümmungsänderung der Funktion umkehrt, zum unteren Rand des Brillenglases hin abnimmt.

Die erfindungsgemäßen Grundgedanken lassen sich selbstverständlich auf beliebige Brillengläser anwenden, z.B. auch auf Brillengläser, deren Hauptmeridian gewunden oder eben ist. Ein besonders einfacher Aufbau ergibt sich jedoch, wenn der Hauptmeridian eben ist.

## Kurze Beschreibung der Zeichnung

Die Erfindung wird nachstehend anhand eines Ausführungsbeispiels unter Bezugnahme auf die Zeichnung näher beschrieben, in der zeigen:
Fig. 1
den Flächenbrechwert eines erfindungsgemäßen Brillenglases längs des Hauptmeridians,
Fig. 2.01 bis 2.17
die Krümmungsradien von Horizontalschnitten als Funktion des Abstandes vom Hauptmeridian,
Fig. 3
die Änderung des Maximalwertes der Funktionen $F_1$, $F_2$ und F.
Fig. 4
den Flächenbrechwert in perspektivischer Darstellung, und
Fig. 5
den Flächenastigmatismus in perspektivischer Darstellung.

## Beschreibung eines Ausführungsbeispiels

Bei dem im folgenden beschriebenen Ausführungsbeispiel ist ohne Beschränkung des allgemeinen Erfindungsgedankens die Vorderfläche als progressive Fläche ausgebildet. Die progressive Fläche weist einen ebenen Hauptmeridian auf; anders ausgedrückt ist der Hauptmeridian eine in einer Ebene verlaufende Kurve.

Das Koordinantensystem ist so gewählt, daß die Y-Achse in der Ebene (x = 0) liegt, die auch den Hauptmeridian enthält.

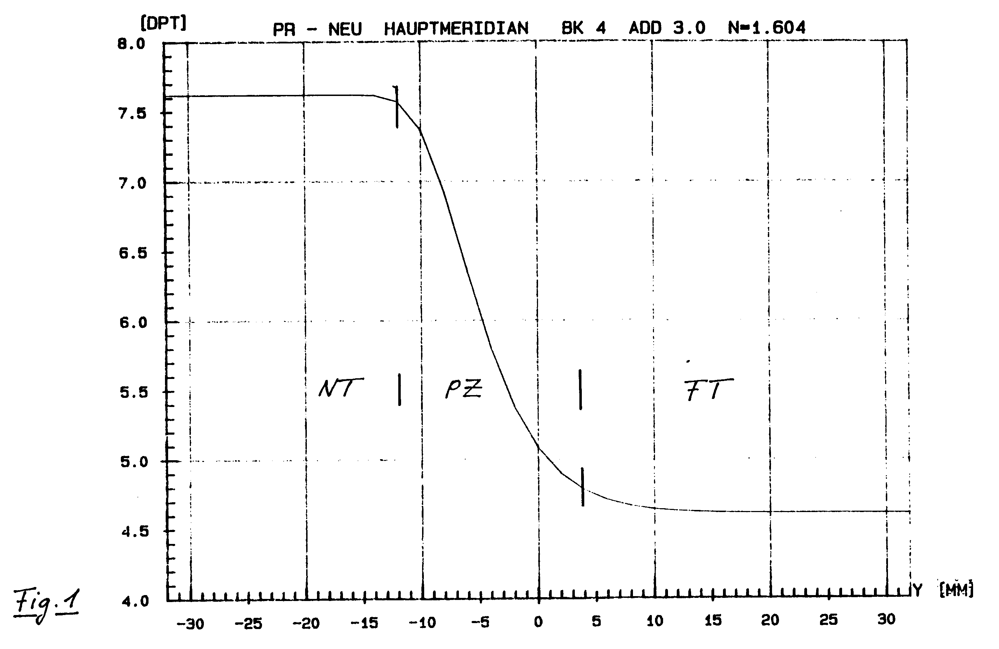

Fig. 1 zeigt den Verlauf des Flächenbrechwerts in Dioptrien (dpt) längs des Hauptmeridians, d.h. längs der y-Achse. Wie Fig. 1 zu entnehmen ist, beträgt der Flächenbrechwert auf dem Hauptmeridian im Fernteil FT ca 4,5 dpt; in der Progressionszone PZ nimmt der Flächenbrechwert auf dem Hauptmeridian um 3 dpt zu, so daß er im Nahteil NT ca 7,5 dpt beträgt; das dargestellte Ausführungsbeispiel hat also eine Basiskurve von 4 dpt und eine Addition A von 3 dpt.

Ferner sind in Fig. 1 die untere Grenze des Fernteils FT, die etwa bei y = 4 mm liegt, und die obere Grenze des Nahteils NT, die etwa bei y = -12 mm liegt, eingezeichnet, zwischen denen sich die eigentliche Progressionszone PZ erstreckt.

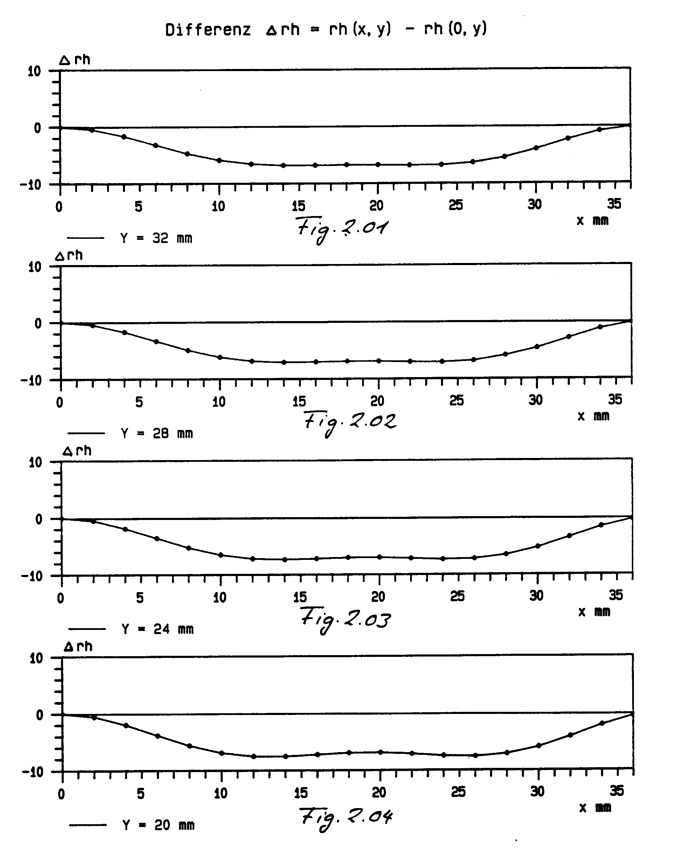

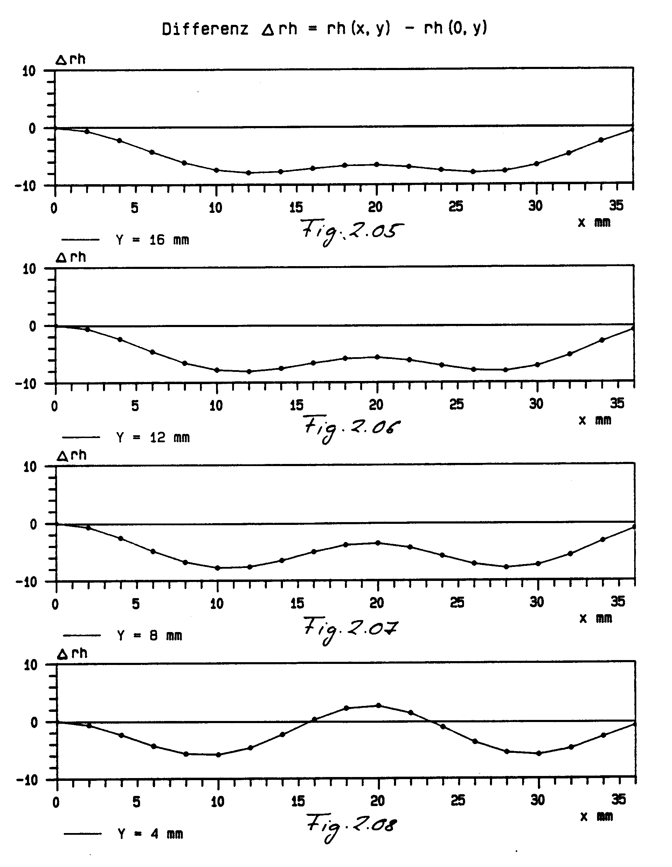

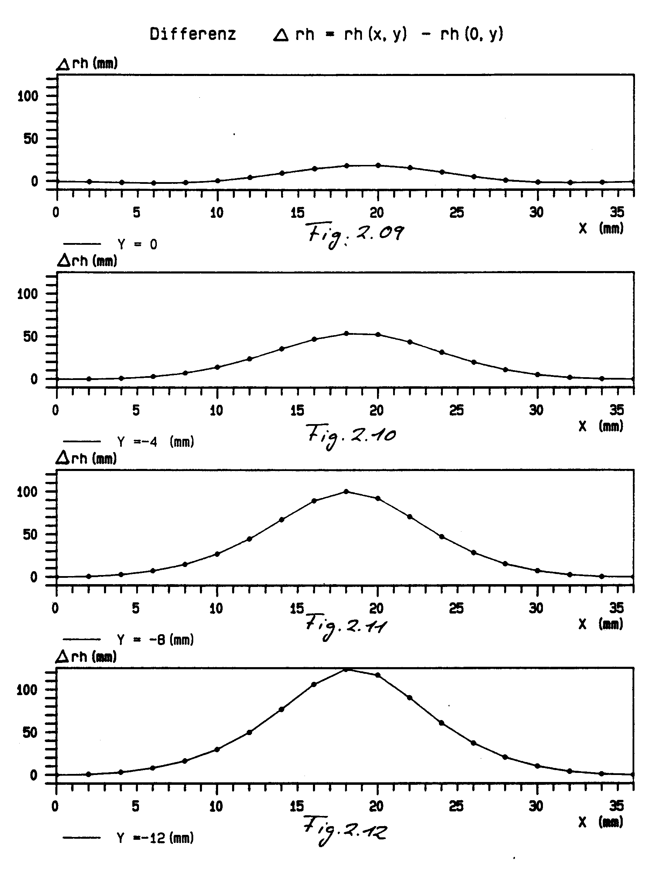

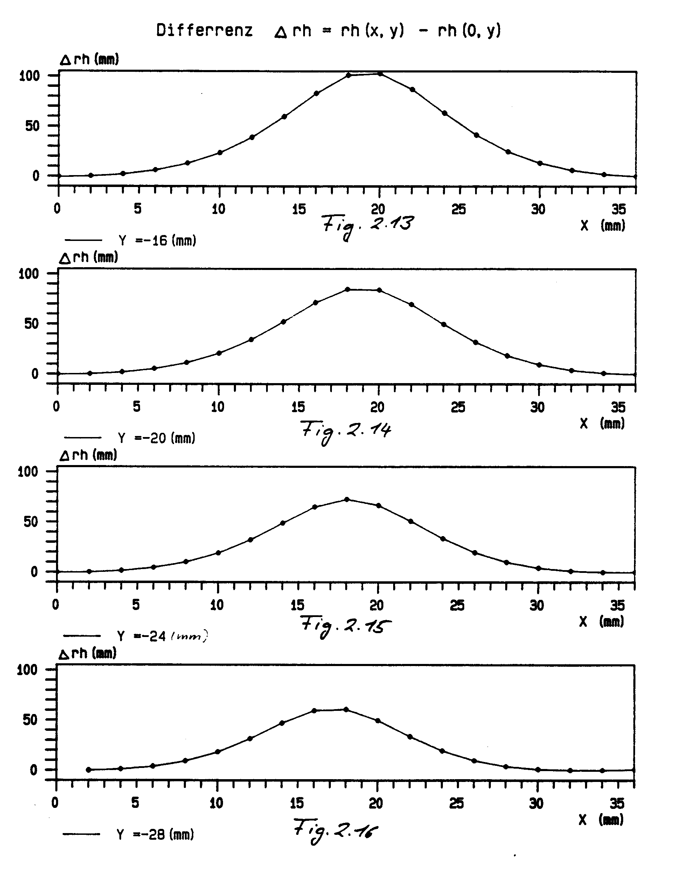

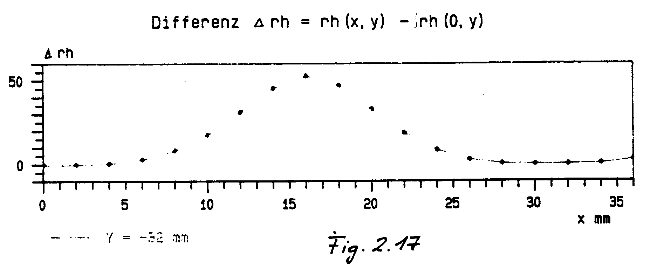

Die Fig. 2.01 bis 2.17 zeigen den Verlauf der Krümmungsradien von Horizontalschnitten, d.h. der Schnittkurven der progressiven Flächen mit Ebenen y = const. in Abhängigkeit von der Koordinate x, d.h. dem Abstand vom Hauptmeridian. Dabei ist in den Figuren die Differenz δrh des Krümmungsradius rh(x) für einen bestimmten x-Wert und des Krümmungsradius rh(0) für den Wert x = 0 eingetragen.

Die Absolutwerte sind in den Figuren nicht angegeben, sie sind jedoch über die Bedingung festgelegt, daß der Astigmatismus auf dem Hauptmeridian einen bestimmten Wert haben soll. Bei dem gezeigten Ausführungsbeispiel ist der Flächenastigmatismus auf dem Hauptmeridian im Fernteil FT und im Nahteil NT (im Rahmen der Fertigungstoleranzen) Null und erreicht in der Progressionszone PZ einen Maximalwert von 0,2 dpt. Selbstverständlich ist es aber auch möglich, den Hauptmeridian vollständig als Nabellinie auszubilden oder einen größeren Maximalwert des Astigmatismus längs des Hauptmeridians zuzulassen.

Durch die Aufgabe der Forderung, daß der Hauptmeridian eine Nabellinie, bei der die Krümmungsradien der Hauptschnitte gleich groß sein müssen, sein soll, ergibt sich eine größere konstruktive Freiheit bei der Gestaltung der progressiven Fläche, durch die sich eine Verbesserung der Korrektur erreichen läßt, ohne daß der geringe Astigmatismus auf dem Hauptmeridian für den Brillenträger störend wäre.

Wie den Fig. 2.01 bis 2.03 zu entnehmen ist, nimmt der Krümmungsradius rh mit wachsendem Abstand x vom Hauptmeridian zunächst ab und bleibt dann über einen größeren Bereich konstant, bevor er wieder zunimmt.

Etwa ab y = 20 mm (Fig. 2.04) tritt etwa bei x = 18 bis 20 mm ein Zwischenmaximum im Verlauf des Krümmungsradius auf, das mit sinkenden y-Werten (Fig. 2.05 bis 2.08) rasch größer wird. Am unteren Rand des Fernteils FT (y = 4 mm) nimmt der Krümmungsradius in der Umgebung des Hauptmeridians zwar noch ab, im Bereich x = 18 bis 20 mm, in dem bei größeren y-Werten das Zwischenmaximum aufgetreten ist, ergibt sich jedoch nunmehr ein Maximalwert, bei dem der Krümmungsradius bereits größer als der Wert des Krümmungsradius am Hauptmeridian ist (Fig. 2.08). Bei noch größeren x-Werten nimmt der Krümmungsradius jedoch wieder auf Werte ab, die kleiner als der Krümmungsradius am Hauptmeridian sind.

Beim Eintritt in die Progressionszone PZ ist der Krümmungsradius zunächst in der Umgebung des Hauptmeridians nahezu konstant und erreicht dann im Bereich x ≈ 20 mm einen Maximalwert (Fig. 2.08), der mit sinkenden y-Werten rasch größer wird und im unteren Bereich der Progressionszone PZ bzw. im oberen Bereich des Nahteils Werte erreicht, die sich um mehr als 100 mm vom Krümmungsradius am Hauptmeridian unterscheiden (Fig. 2.10 folgende).

Mit weiter sinkenden y-Werten nimmt der Unterschied zwischen dem maximalen Krümmungsradius, der für jeden Horizontalschnitt weiter bei x-Werten zwischen etwa 18 mm und 20 mm liegt, wieder ab (Fig. 2.13 f).

Dieser in den Fig. 2.01 bis 2.17 dargestellte Verlauf der Krümmungsradien rh(x) von Horizontalschnitten als Funktion des Abstandes x vom Hauptmeridian ist eine Folge des erfindungsgemäßen Flächenaufbaus:

Zur Berechnung einer erfindungsgemäß aufgebauten Fläche läßt sich beispielsweise der Verlauf der

Krümmungsänderung

$$\delta rh = r(x,v) - r(0,y)$$

von Horizontalschnitten (y = const.) als Funktion des Abstandes vom Hauptmeridian durch die Überlagerung zweier Funktionen $F_1(x,y)$ und $F_2(x,y)$ beschreiben:

$$\delta rh = F(x,y) = F_1(x,y) + F_2(x,y)$$

Gemäß der ersten Funktion $F_1(x,y)$ nimmt der Krümmungsradius bei dem gezeigten Ausführungsbeispiel, bei dem die progressive Fläche die Vorderfläche ist, zunächst zu und kehrt sich etwa bei einem Abstand vom Hauptmeridian von ca 20 mm wieder um. Gemäß der zweiten Funktion $F_2(x,y)$ nimmt der Krümmungsradius zunächst ab, wobei sich die Änderung des Krümmungsradius bei einem Abstand, der wiederum etwa 20 mm vom Hauptmeridian beträgt, ebenfalls umkehrt.

Erfindungsgemäß sind für alle Horizontalschnitte die Funktionen $F_1$ und $F_2$ jeweils topologisch gleich, die Absolutwerte der Amplituden der beiden Funktionen ändern sich jedoch längs des Hauptmeridians gegenläufig.

Wenn die progressive Fläche die augenseitige Fläche ist bzw. auch die Augenseitige Fläche zum Brechkraftanstig beiträgt, nimmt gemäß der ersten Funktion $F_1(x,y)$ der Krümmungsradius ab, wobei sich die Änderung des Krümmungsradius ebenfalls bei einem Abstand von 14 bis 26 mm vom Hauptmeridian umkehrt; gemäß der zweiten Funktion $F_2(x,y)$ nimmt der Krümmungsradius bei der augenseitigen Fläche zu, wobei sich die Änderung des Krümmungsradius bei einem Abstand von 14 bis 26 mm vom Hauptmeridian umkehrt,

Weiterhin ändern sich die Absolutwerte der Amplituden der beiden Funktionen längs des Hauptmeridians wenigstens in der Progressionszone gegenläufig ändern. Ferner gilt wenigstens im Bereich des Fernteils für jeden Punkt $(x_o,y_o)$ innerhalb eines Streifens, der den Hauptmeridian umschließt:

$$\delta F_2/\delta x \ (x = x_o, y = y_o) > \delta F_1/\delta x \ (x = x_o, y = y_o)$$

wobei $\delta F_1/\delta x$ die erste Ableitung der Funktion $F_i$ nach x ist. Dies bedeutet, daß sich die Funktionen $F_1$ und $F_2$ in ihrem Flankenanstieg unterscheiden, der bei der zweiten Funktion im Bereich des Hauptmeridians größer ist.

Die beiden Funktionen werden nun so überlagert, daß sich die Absolutwerte der Amplituden der beiden Funktionen längs des Hauptmeridians wenigstens in der Progressionszone gegenläufig ändern.

Diese erfindungsgemäße Gestaltung der beiden Funktionen führt zu Bereichen, in denen der Anteil einer Funktion überwiegt, und andererseits zu Bereichen, in denen beide Funktionen unterschiedlich die Gestaltung der progressiven Fläche beeinflussen.

Diese Eigenschaften des erfindungsgemäßen progressiven Brillenglases sind eine Folge der Überlagerung zweier Funktionen, durch die sich eine Flächenanpassung bzw. ein Flächenübergang vom Fernteil zum Nahteil in den seitlichen Bereichen ergibt, der für den Brillenträger weder zu störenden Aberrationen noch zu Schaukelbewegungen aufgrund von unverträglicher Verzeichnung etc. führt. Insbesondere ermöglicht die erfindungsgemäße Flächengestaltung eine Flächenkorrektur in der Peripherie weitgehend unabhängig von der in der Umgebung des Hauptmeridians; dies ist eine Voraussetzung für die erwähnten vorteilhaften Eigenschaften.

Die erfindungsgemäßen progressiven Flächen haben darüberhinaus den Vorteil, daß ihre Berechnung mit vergleichsweise kleinem Aufwand möglich ist, so daß sie für jede Fernteil-Wirkung und jede Addition gesondert berechnet werden können. Beim Stand der Technik wird dagegen lediglich eine Fläche tatsächlich berechnet. Die weiteren Flächen werden dann aus dieser Fläche durch "Ähnlichkeitstransformationen" abgeleitet. Es bedarf keiner weiteren Erläuterung, daß sich hierdurch unter Umständen schlechtere Eigenschaften ergeben können.

Besonders vorteilhaft ist es, wenn die gegenläufige Änderung der Absolutwerte der Amplituden der beiden Funktionen derart ist, daß die Amplitude der zweiten Funktion im Fernteil maximal und im Nahteil nahezu oder gleich Null ist. Aufgrund dieser Änderung der Amplitude der zweiten Funktion ist diese lediglich im Fernteil und im oberen Bereich der Progressionszone wirksam, nicht jedoch im unteren Teil der Progressionszone und in Nahteil.

Dagegen ist es für die erste Funktion besonders vorteilhaft, wenn deren Maximalamplitude vom unteren Rand des Brillenglases zunächst auf einen Maximalwert im Bereich des Nahbezugspunktes zunimmt und dann auf einen Wert im Bereich des Fernteils abnimmt, der bei vergleichsweise kleinen Werten > 0 bleibt. Die erste Funktion ist also nicht nur im Nahteil und im unteren Teil der Progressionszone, sondern auch im Fernteil und im oberen Teil der Progressionszone von Bedeutung.

Weiterhin kann der Abstand des Punktes vom Hauptmeridian, an dem sich die durch die erste Funktion gegebene Krümmungsänderung umkehrt, in Richtung auf den Außenbereich des Nahteils abnehmen.

Diese besondere gegenläufige Variation der Amplituden der beiden Funktionen $F_1$ und $F_2$ führt zu einer in den seitlichen Randbereichen besonders gut ausgeglichenen Fläche, bei der der Fernteil mit seinen besonderen Charakteristika ohne störende Astigmatismus-Anhäufung oder Astigmatismus-Sprünge kontinuierlich in den Nahteil übergeht.

Insbesondere kann das Verhältnis der Absolutwerte der Maximal-Amplituden der ersten und zweiten Funktion größer als 10:1 sein und bevorzugt zwischen 15:1 und 25:1 liegen.

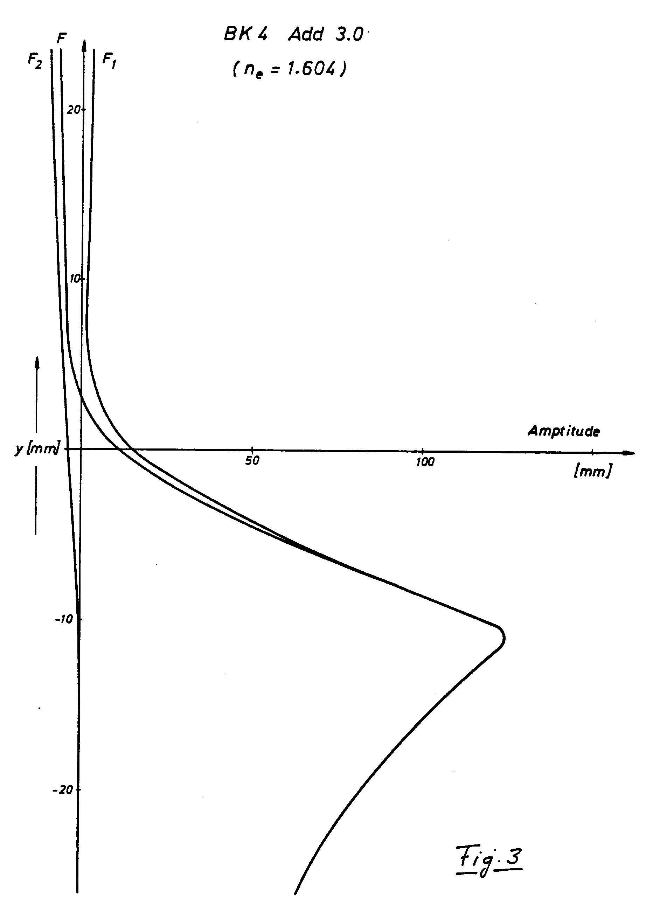

Fig. 3 zeigt die Änderung des Maximalwerts der Funktionen $F_1$ und $F_2$ als Funktion von y. Wiederum sind in Fig. 3 die Grenzen des Fernteils FT, der Progressionszone PZ und des Nahteils NT eingezeichnet. Wie Fig. 3 zu entnehmen ist, erreicht der Maximalwert der Funktion $F_1$ im unteren Bereich der Progressionszone ein Maximum und nimmt dann rasch auf einen sehr kleinen Wert im Bereich des Fernteils ab. Die Funktion $F_2$ hat dagegen im Fernteil einen Maximalwert und nimmt bereits im mittleren Teil der Progressionszone PZ auf so kleine Werte ab, daß sie im Vergleich zur Funktion $F_1$ nicht mehr wirksam ist. Auch im Fernteil ist der Maximalwert der Funktion $F_2$ klein im Vergleich zum Maximalwert der Funktion $F_1$, jedoch deutlich größer als der Wert der Funktion $F_1$ bei gleichen y-Werten.

In Fig. 3 ist ferner die Maximalamplitude der Funktion $F = F_1 + F_2$ eingezeichnet, die sich durch Überlagerung der beiden Funktionen ergibt.

Die Fig. 4 und 5 zeigen in einer perspektivischen Darstellung den Verlauf des Flächenbrechwerts sowie des Flächenastigmatismus für das in den Fig. 1 bis 3 flächenmäßig dargestellte erfindungsgemäße Brillenglas.

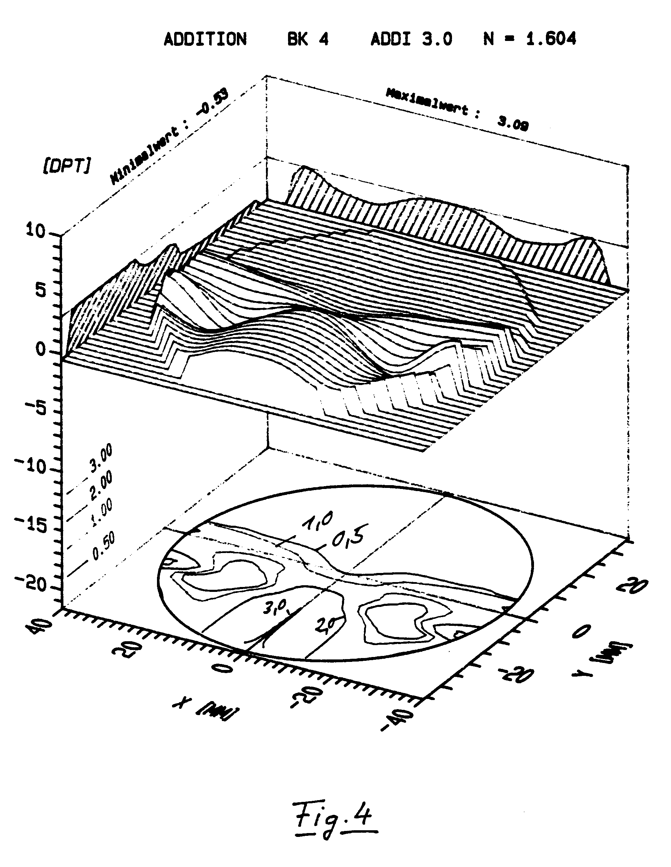

Wie Fig. 4 zu entnehmen ist, verlaufen die Linien gleichen Flächenbrechwerts im Bereich der Progressionszone nahe des Hauptmeridians annähernd horizontal, so daß sich für den Brillenträger ein angenehmer gleichförmiger Progressionsanstieg auch dann ergibt, wenn die Blicksenkung nicht exakt längs des Hauptmeridians erfolgt.

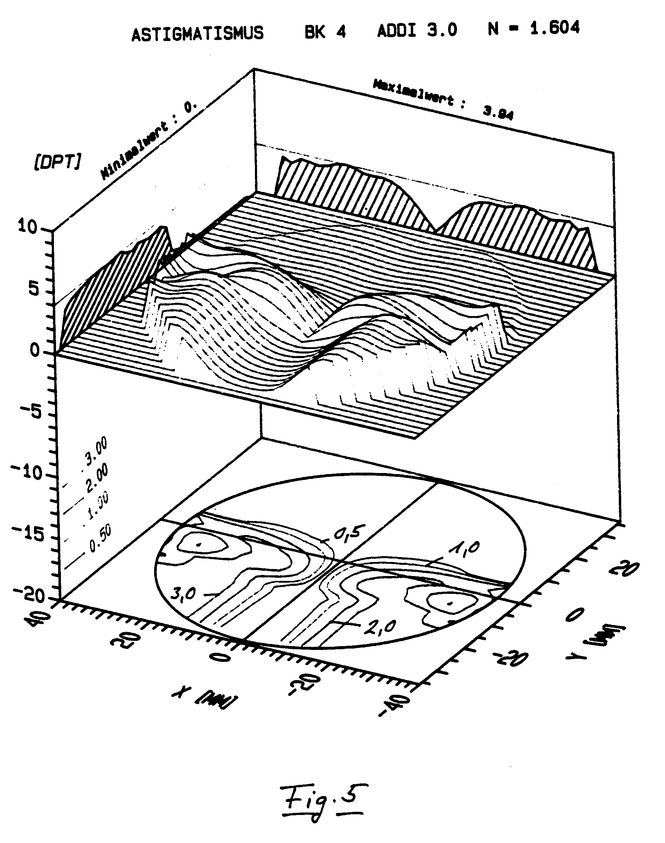

Fig. 5 zeigt, daß der Flächenastigmatismus in den seitlichen Randbereichen Werte wie bei Brillengläsern vergleichbarer Addition, die zum Stand der Technik gehören, erreicht, daß jedoch die Änderung des Flächenastigmatismus vergleichsweise klein ist; anders ausgedrückt ist das "Gebirge", das in perspektivischer Darstellung den Flächenastigmatismus darstellt, weit weniger "zerklüftet" als bei vergleichbaren bekannten Brillengläsern, d.h. Brillengläser mit gleicher Basiskurve und gleicher Addition.

Vorstehend ist die Erfindung anhand eines Ausführungsbeispiels ohne Beschränkung des allgemeinen Erfindungsgedankens beschrieben worden, der insbesondere den Ansprüchen zu entnehmen ist.

Das gezeigte Ausführungsbeispiel hat eine Basiskurve von 4 dpt, und die Addition von 3,0 dpt; ferner ist ein Brechungsindex n = 1,604 zugrundegelegt. Selbstverständlich erhält man bei Anwendung der erfindungsgemäßen Grundgedanken auch bei anderen Basiskurven, Additionen und Brechungsindices die gleichen Vorteile wie bei dem beschriebenen Ausführungsbeispiel. So ist es insbesondere möglich, das erfindungsgemäße Brillenglas aus einem Kunststoffmaterial mit einem Brechnungsindex von 1,50 oder einem Glas mit einem Brechungsindex von 1,525 bzw. 1,7 zu fertigen.

Ferner ist bei dem gezeigten Ausführungsbeispiel der Hauptmeridian eine ebene Kurve. Die erfindungsgemäßen Grundgedanken, das Brillenglas durch die Überlagerung zweier Funktionen aufzubauen, lassen sich jedoch auch auf Brillengläser übertragen, bei denen der Hauptmeridian eine gewundene Kurve ist, die der Hauptblicklinie, also der Linie der Durchstoßpunkte der Sehstrahlen bei einer Blicksenkung folgt. Die Form derartiger Hauptmeridiane ist aus der Literatur bekannt, so daß hierauf nicht näher eingegangen werden muß.

Die erfindungsgemäße Flächengestaltung führt aber auch bei einem ebenen Hauptmeridian zu einer derart breiten Progressionszone und einem derart breiten Nahteil, daß auch ein Abweichen der Hauptblicklinie vom Hauptmeridian für den Brillenträger nicht zu störenden Aberrationen führt.

Selbstverständlich ist es möglich, das erfindungsgemäße Brillenglas in bekannter Weise verschwenkt in eine Brillenfassung einzuschleifen und/oder das Glas dezentriert zu fertigen; damit ist gemeint, daß der Hauptmeridian nicht durch den geometrischen Mittelpunkt des rohrunden Glases verläuft.

Dabei ist es insbesondere möglich, das Glas bereits in "Gebrauchsstellung" zu berechnen, d.h. nicht nur den Astigmatismus schiefer Bündel in die Korrektur mit einzubeziehen, sondern auch eventuelle "Horizontalsymmetrien" in Gebrauchsstellung zu berücksichtigen. Auch hierzu wird auf die einschlägige Literatur verwiesen.

Das beschriebene Ausführungsbeispiel ist ein Brillenglas für normale Anwendungen, bei dem auf einem vergleichsweise großen Fernteil und einem darunter befindlichen Nahteil Wert gelegt wird.

Die erfindungsgemäßen Grundgedanken lassen sich jedoch auch auf Brillengläser übertragen, bei denen der Nahteil vergleichsweise groß, der Fernteil dagegen vergleichsweise klein sein soll; auch kann sich der Nahteil beispielsweise über dem Fernteil befinden, wie dies beispielsweise bei Spezialgläsern, wie Piloten- oder Bildschirmbrillen häufig gefordert wird.

**Patentansprüche**

1. Progressives Brillenglas mit einer konvexen Vorderfläche und einer konkaven augenseitigen Fläche, von denen die Vorderfläche als sog. Gleitsichtfläche gestaltet ist, auf der
   - die Brechkraft von einen Fernteil (FT) über eine Progressionszone (PZ) zu einem Nahteil (NT) ansteigt, und
   - die Krümmungsradien (rh) der Schnittkurven, nachfolgend Horizontalschnitte genannt, mit horizontalen Ebenen, d.h. für y = const, als Funktion der Entfernung vom Hauptmeridian im Bereich des Hauptmeridians im Fernteil zunächst abnehmen und im Nahteil zunächst zunehmen und
   - der Verlauf der Krümmungsdifferenzen

     $$\delta rh(x, y = const) = rh(x,y) - rh(0,y)$$

     mit wachsendem Abstand ($|x|$) vom Hauptmeridian mindestens ein Minimum oder Maximum durchläuft,

     **gekennzeichnet** durch die Kombination folgender Merkmale:
   - etwa in der Mittes des Fernteils, d.h. bei y ≈ 20 mm tritt bei x ≈ 18 bis 20 mm ein lokales Maximum der Krümmungsdifferenzen auf, das von zwei lokalen Minima umgeben ist und das mit zunehmender Annäherung an die Progressionszone, d.h. für sinkende y-Werte, größer wird,
   - im Bereich der Progressionszone und des Nahteils sind die beiden lokalen Minima verschwunden, so daß es nur ein Maximum gibt,
   - in dem an die Progressionszone angrenzenden Bereich des Fernteils ist der Wert des Krümmungsradius an der Stelle des lokalen Maximums größer als der Wert des Krümmungsradius auf dem Hauptmeridian,
   - in dem an den Fernteil angrenzenden Bereich der Progressionszone ist der Krümmungsradius rh von Horizontalschnitten innerhalb eines Streifen beidseits des Hauptmeridians nahezu konstant,
   - der Wert des Maximums der Krümmungsdifferenzen wird mit zunehmender Annäherung der Horizontalschnitte an den Nahteil, d.h. für sinkende y-Werte, größer,
   - der Betrag des Maximums der Krümmungsdifferenzen erreicht in dem Bereich, in dem die Progressionszone und der Nahteil aneinander angrenzen einen Maximalwert,

- im Nahteil wird der Betrag des Maximums der Krümmungsdifferenzen von Horizontalschnitten mit wachsendem Abstand von der Progressionszone kleiner.

2. Progressives Brillenglas mit einer konvexen Vorderfläche und einer konkaven augenseitigen Fläche, von denen die augenseitige Fläche als sog. Gleitsichtfläche gestaltet ist, auf der
   - die Brechkraft von einem Fernteil (FT) über eine Progressionszone (PZ) zu einem Nahteil (NT) ansteigt, und
   - die Krümmungsradien (rh) der Schnittkurven, nachfolgend Horizontalschnitte genannt, mit horizontalen Ebenen, d.h. für y = const, als Funktion der Entfernung vom Hauptmeridian im Bereich des Hauptmeridians im Fernteil zunächst zunehmen und im Nahteil zunächst abnehmen und
   - der Verlauf der Krümmungsdifferenzen

$$\delta rh(x, y = const) = rh(x,y) - rh(0,y)$$

   mit wachsendem Abstand ($|x|$) vom Hauptmeridian mindestens ein Minimum oder Maximum durchläuft,
   **gekennzeichnet** durch die Kombination folgender Merkmale:
   - etwa in der Mittes des Fernteils, d.h. bei y ≈ 20 mm tritt bei x ≈ 18 bis 20 mm ein lokales Minimum der Krümmungsdifferenzen auf, das von zwei lokalen Maxima umgeben ist und das mit zunehmender Annäherung an die Progressionszone, d.h. für sinkende y-Werte, größer wird,
   - im Bereich der Progressionszone und des Nahteils sind die beiden lokalen Maxima verschwunden, so daß es nur ein Minimum gibt,
   - in dem an die Progressionszone angrenzenden Bereich des Fernteils ist der Wert des Krümmungsradius an der Stelle des lokalen Minimums kleiner als der Wert des Krümmungsradius auf dem Hauptmeridian,
   - in dem an den Fernteil angrenzenden Bereich der Progressionszone ist der Krümmungsradius rh von Horizontalschnitten innerhalb eines Streifen beidseits des Hauptmeridians nahezu konstant,
   - der Wert des Minimums der Krümmungsdifferenzen wird mit zunehmender Annäherung der Horizontalschnitte an den Nahteil, d.h. für sinkende y-Werte, größer,

   - der Betrag des Minimums der Krümmungsdifferenzen erreicht in dem Bereich, in dem die Progressionszone und der Nahteil aneinander angrenzen einen Maximalwert,
   - im Nahteil wird der Betrag des Minimums der Krümmungsdifferenzen von Horizontalschnitten mit wachsendem Abstand von der Progressionszone kleiner.

3. Brillenglas nach Anspruch 1 oder 2, dadurch **gekennzeichnet,** daß der Krümmungsradius (rh) von Horizontalschnitten im Außenbereich des Fernteils zwischen einem Abstand ($|x|$) von etwa 10 mm und 25 mm vom Hauptmeridian nahezu konstant ist.

4. Brillenglas nach einem der Ansprüche 1 bis 3, dadurch **gekennzeichnet,** daß kein Horizontalschnitt auch nur angenähert konstante Krümmungsradien aufweist.

5. Brillenglas nach einem der Ansprüche 1 bis 4, dadurch **gekennzeichnet,** daß das Brillenglas keinen sphärisch ausgebildeten Bereich aufweist.

6. Brillenglas nach einem der Ansprüche 1 bis 5, dadurch **gekennzeichnet,** daß der Hauptmeridian der Gleitsichtfläche eben ist.

7. Brillenglas nach einem der Ansprüche 1 bis 6, dadurch **gekennzeichnet,** daß der Flächen-Astigmatismus auf dem Hauptmeridian im Fernteil und in Nahteil etwa 0 dpt ist und in der Progressionszone einen Wert von 0,5 dpt nicht überschreitet.

**Claims**

1. Progressive spectacle glass with a convex front surface and a concave surface on the eye side, of which the front surface is designed as a so-called progressive surface on which
   - the power increases from a far portion (FT) through a progression zone (PZ) to a near portion (NT), and
   - the radii of curvature (rh) of the section curves, hereinafter referred to as horizontal sections, with horizontal planes, i.e. where y = const, first decrease in the far portion and first increase in the near portion in the region of the chief meridian as a function of the distance from the chief meridian, and
   - the trend of the differences in curvature

$$\delta rh(x, y = const) = rh(x,y) - rh(0,y)$$

passes through at least one minimum or maximum with increasing distance (|x|) from the chief meridian,

characterised by the combination of the following characteristics:

- approximately at the centre of the far portion, i.e. where y ≈ 20 mm, where x ≈ 18 to 20 mm there is a local maximum of the differences in curvature which is surrounded by two local minima and which becomes greater with increasing proximity to the progression zone, i.e. for falling values of y,
- in the region of the progression zone and the near portion, the two local minima have disappeared, so that there is only a maximum,
- in the region of the far portion adjoining the progression zone, the value of the radius of curvature at the point of the local maximum is greater than the value of the radius of curvature on the chief meridian,
- in the region of the progression zone adjoining the far portion, the radius of curvature rh of horizontal sections within a strip on both sides of the chief meridian is almost constant,
- the value of the maximum of the differences in curvature becomes greater with increasing proximity of the horizontal sections to the near portion, i.e. for falling values of y,
- the amount of the maximum of the differences in curvature reaches a maximum value in the region in which the progression zone and the near portion adjoin each other,
- in the near portion the amount of the maximum of the differences in curvature of horizontal sections becomes smaller with increasing distance from the progression zone.

2.  Progressive spectacle glass with a convex front surface and a concave surface on the eye side, of which the surface on the eye side is designed as a so-called progressive surface on which

- the power increases from a far portion (FT) through a progression zone (PZ) to a near portion (NT), and
- the radii of curvature (rh) of the section curves, hereinafter referred to as horizontal sections, with horizontal planes, i.e. where y = const, first increase in the far portion and first decrease in the near portion in the region of the chief meridian as a function of the distance from the chief meridian, and

- the trend of the differences in curvature

$$\delta rh(x, y = const) = rh(x,y) - rh(0,y)$$

passes through at least one minimum or maximum with increasing distance (|x|) from the chief meridian,

characterised by the combination of the following characteristics:

- approximately at the centre of the far portion, i.e. where y ≈ 20 mm, where x ≈ 18 to 20 mm there is a local minimum of the differences in curvature which is surrounded by two local maxima and which becomes greater with increasing proximity to the progression zone, i.e. for falling values of y,
- in the region of the progression zone and the near portion, the two local maxima have disappeared, so that there is only a minimum,
- in the region of the far portion adjoining the progression zone, the value of the radius of curvature at the point of the local minimum is smaller than the value of the radius of curvature on the chief meridian,
- in the region of the progression zone adjoining the far portion, the radius of curvature rh of horizontal sections within a strip on both sides of the chief meridian is almost constant,
- the value of the minimum of the differences in curvature becomes greater with increasing proximity of the horizontal sections to the near portion, i.e. for falling values of y,
- the amount of the minimum of the differences in curvature reaches a maximum value in the region in which the progression zone and the near portion adjoin each other,
- in the near portion the amount of the minimum of the differences in curvature of horizontal sections becomes smaller with increasing distance from the progression zone.

3.  Spectacle glass according to claim 1 or 2, characterised in that the radius of curvature (rh) of horizontal sections in the outer region of the far portion between a distance (|x|) of about 10 mm and 25 mm from the chief meridian is almost constant.

4. Spectacle glass according to any of claims 1 to 3, characterised in that no horizontal section also has only approximately constant radii of curvature.

5. Spectacle glass according to any of claims 1 to 4, characterised in that the spectacle glass comprises no region of spherical construction.

6. Spectacle glass according to any of claims 1 to 5, characterised in that the chief meridian of the progressive surface is flat.

7. Spectacle glass according to any of claims 1 to 6, characterised in that the surface astigmatism on the chief meridian is about 0 D in the far portion and in the near portion and does not exceed a value of 0.5 D in the progression zone.

**Revendications**

1. Lentille ophtalmique progressive comprenant une surface convexe avant et une surface concave située du côté de l'oeil, dont la surface est constituée sous forme d'une surface dite de progression, sur laquelle:
   - le pouvoir réfringent va en augmentant depuis une partie pour vision lointaine (VL) vers une partie pour vision rapprochée (VR) en passant par une zone de progression (ZP), et
   - les rayons de courbure (rh) des courbes de section, appelées dans ce qui suit sections horizontales, de plans horizontaux, c'est-à-dire pour y = constante, commencent par diminuer dans la partie pour vision lointaine et commencent par augmenter dans la partie pour vision rapprochée, par rapport au méridien principal, en fonction de l'éloignement par rapport au méridien principal, et
   - l'allure générale des différences de courbure

     $$\delta rh(x, y = constante) = rh(x, y) - rh(0, y)$$

     passe au moins par un minimum ou par un maximum à mesure qu'augmente la distance $|(x)|$ par rapport au méridien principal;
        caractérisée par la combinaison des caractéristiques suivantes:
   - environ au milieu de la partie pour vision lointaine, c'est-à-dire pour y ≈ 20 mm, apparaît pour x ≈ 18 à 20 mm un maximum local des différences de courbure qui est entouré par deux minima locaux et qui augmente lorsqu'on se rapproche de façon croissante de la zone de progression, c'est-à-dire pour des valeurs de y qui diminuent,
   - dans la région de la zone de progression et dans la partie pour vision rapprochée, les deux minima locaux disparaissent, ce qui fait qu'il ne subsiste qu'un maximum,
   - dans la région de la partie pour vision lointaine qui est voisine de la zone de progression, la valeur du rayon de courbure dans la position du maximum local est supérieure à la valeur du rayon de courbure sur le méridien principal;
   - dans la région de la zone de progression qui est voisine de la partie pour vision lointaine, le rayon de courbure rh de sections horizontales est sensiblement constant à l'intérieur d'une bande située de chaque côté du méridien principal,
   - la valeur du maximum des différences de courbure augmente à mesure que les sections horizontales se rapprochent de la partie pour vision rapprochée, c'est-à-dire quand les valeurs de y diminuent,
   - la valeur du maximum des différences de courbure atteint une valeur maximale dans la région où la zone de progression et la partie pour vision rapprochée sont voisines l'une de l'autre,
   - dans la partie pour vision rapprochée, la valeur du maximum des différences de courbure de sections horizontales diminue à mesure qu'augmente la distance par rapport à la zone de progression.

2. Lentille ophtalmique progressive comprenant une surface convexe avant et une surface concave située du côté de l'oeil, dont la surface est constituée sous forme d'une surface dite de progression, sur laquelle:
   - le pouvoir réfringent va en augmentant depuis une partie pour vision lointaine (VL) vers une partie pour vision rapprochée (VR) en passant par une zone de progression (ZP), et
   - les rayons de courbure (rh) des courbes de section, appelées dans ce qui suit sections horizontales, de plans horizontaux, c'est-à-dire pour y = constante, commencent par augmenter dans la partie pour vision lointaine et commencent par diminuer dans la partie pour vision rapprochée, par rapport au méridien principal, en fonction de l'éloignement par rapport au méridien principal, et

- l'allure générale des différences de courbure

$$\delta rh(x, y = constante) = rh(x, y) - rh(0, y)$$

passe au moins par un minimum ou par un maximum à mesure qu'augmente la distance $|(x)|$ par rapport au méridien principal;

caractérisée par la combinaison des caractéristiques suivantes:

- environ au milieu de la partie pour vision lointaine, c'est-à-dire pour $y \approx 20$ mm, apparaît pour $x \approx 18$ à 20 mm un minimum local des différences de courbure qui est entouré par deux maxima locaux et qui augmente lorsqu'on se rapproche de façon croissante de la zone de progression, c'est-à-dire pour des valeurs de y qui diminuent,
- dans la région de la zone de progression et dans la partie pour vision rapprochée, les deux maxima locaux disparaissent, ce qui fait qu'il ne subsiste qu'un minimum,
- dans la région de la partie pour vision lointaine qui est voisine de la zone de progression, la valeur du rayon de courbure dans la position du minimum local est inférieure à la valeur du rayon de courbure sur le méridien principal;
- dans la région de la zone de progression qui est voisine de la partie pour vision lointaine, le rayon de courbure rh de sections horizontales est sensiblement constant à l'intérieur d'une bande située de chaque côté du méridien principal,
- la valeur du minimum des différences de courbure augmente à mesure que les sections horizontales se rapprochent de la partie pour vision rapprochée, c'est-à-dire quand les valeurs de y diminuent,
- la valeur du minimum des différences de courbure atteint une valeur maximale dans la région où la zone de progression et la partie pour vision rapprochée sont voisines l'une de l'autre,
- dans la partie pour vision rapprochée, la valeur du minimum des différences de courbure de sections horizontales diminue à mesure qu'augmente la distance par rapport à la zone de progression.

3. Lentille ophtalmique selon la revendication 1 ou 2,
   caractérisée en ce que le rayon de courbure (rh) de sections horizontales est sensiblement constant dans la région externe de la partie pour vision lointaine entre une distance ($|x|$) d'environ 10 mm et 25 mm par rapport au méridien principal.

4. Lentille ophtalmique selon l'une quelconque des revendications 1 à 3,
   caractérisée en ce qu'aucune section horizontale ne présente des rayons de courbure même approximativement constants.

5. Lentille ophtalmique selon l'une quelconque des revendications 1 à 4,
   caractérisée en ce que la lentille ophtalmique ne comporte aucune région de constitution sphérique.

6. Lentille ophtalmique selon l'une quelconque des revendications 1 à 5,
   caractérisée en ce que le méridien principal de la surface progressive est rectiligne.

7. Lentille ophtalmique selon l'une quelconque des revendications 1 à 6,
   caractérisée en ce que l'astigmatisme de surface sur le méridien principal dans la partie pour vision lointaine et dans la partie pour vision rapprochée est d'environ 0 dpt et ne dépasse pas la valeur de 0,5 dpt dans la zone de progression.

PR — NEU  HAUPTMERIDIAN     BK 4   ADD 3.0   N=1.604

Fig. 1

EP 0 291 094 B1

Differenz △rh = rh (x, y) − rh (0, y)

Fig. 2.01

Y = 32 mm

Fig. 2.02

Y = 28 mm

Fig. 2.03

Y = 24 mm

Fig. 2.04

Y = 20 mm

Differenz $\triangle rh = rh(x, y) - rh(0, y)$

Fig. 2.05

— Y = 16 mm

Fig. 2.06

— Y = 12 mm

Fig. 2.07

— Y = 8 mm

Fig. 2.08

— Y = 4 mm

Differenz    △ rh = rh (x, y) − rh (0, y)

Fig. 2.09

——— Y = 0

Fig. 2.10

——— Y = −4  (mm)

Fig. 2.11

——— Y = −8 (mm)

Fig. 2.12

——— Y = −12 (mm)

Differrenz   △ rh = rh (x, y) − rh (0, y)

Fig. 2.13

Y =−16 (mm)

Fig. 2.14

Y =−20 (mm)

Fig. 2.15

Y =−24 (mm)

Fig. 2.16

Y =−28 (mm)

Differenz $\Delta$ rh = rh (x, y) − rh (0, y)

Fig. 2.17

— ·— · Y = −32 mm

BK 4   Add  3.0

$(\, n_e = 1.604 \,)$

Fig. 3

ADDITION    BK 4    ADDI 3.0    N = 1.604

Fig.4

Fig. 5